# EUROPÄISCHE PATENTANMELDUNG

(11) **EP 1 808 791 A1**
(43) Veröffentlichungstag der Anmeldung: **18.07.2007**
(21) Anmeldenummer: 05028434.8
(22) Anmeldetag: 23.12.2005
(51) Int. Cl.: G06F 21/00

(54) **Rechner-Arbeitsplatz und Verfahren zum Aktivieren eines Zugriffsschutzes**

(71) Anmelder: SIEMENS AKTIENGESELLSCHAFT, 80333 München (DE)
(72) Erfinder: Rödel-Krainz, Johann, 91242 Ottensoos (DE)

(57) **Zusammenfassung**

Rechner-Arbeitsplatz mit einem Zugriffsschutz, welcher einen unberechtigten Zugriff eines Benutzers auf den Rechner-Arbeitsplatz (1) verhindert, wobei ein gültiges Passwort (12) mindestens eines Benutzers den Zugriffsschutz deaktiviert. Um den Zugriffsschutz einfach zu aktivieren ist vorgesehen, dass der Rechner-Arbeitsplatz (1) eine Leseeinheit (6) zum berührungslosen Lesen von Informationen und eine Auswerteeinheit (9) enthält, in welcher erste Identifikationsdaten (11) des mindestens einen Benutzers hinterlegt sind und welche nach einem deaktivierten Zugriffsschutz die ersten Identifikationsdaten (11) mit zweiten Identifikationsdaten (14) vergleicht, die in einem Speicher (8) eines Transponders (7) hinterlegt sind, wobei in Abhängigkeit des Vergleichsergebnisses für den mindestens einen Benutzer der Zugriffsschutz aktiviert wird.

## Beschreibung

Die Erfindung betrifft einen Rechner-Arbeitsplatz mit einem Zugriffsschutz, welcher einen unberechtigten Zugriff eines Benutzers auf den Rechner-Arbeitsplatz verhindert, wobei ein gültiges Passwort mindestens eines Benutzers den Zugriffsschutz deaktiviert. Darüber hinaus betrifft die Erfindung ein Verfahren zum Aktivieren eines Zugriffsschutzes eines Rechner-Arbeitsplatzes.

Ein Rechner-Arbeitsplatz mit einem Zugriffsschutz ist hinlänglich, z. B. in Form eines so genannten Windows-Rechners, bekannt. Auf einer Rechnereinheit des Rechner-Arbeitsplatzes ist ein geeignetes Programm installiert, das einen Bildschirmschoner dann aktiviert, falls nach einem durch einen Benutzer vorgebbaren Zeitintervall keine Bedienung der Rechnereinheit erfolgt oder falls der Benutzer den Zugriffsschutz durch Drücken einer vorgegebenen Tastenkombination aktiviert. Im einfachsten Fall ist der Bildschirmschoner ein eine Graustufe umfassendes Bild oder ein Text, dessen Position sich innerhalb eines Graubildes ändert. Um den Bildschirmschoner zu deaktivieren, wird gewöhnlich eine Taste auf einer Tastatur der Rechnereinheit gedrückt oder eine so genannte Maus der Rechnereinheit bewegt, wobei erst nach Eingabe eines korrekten Passwortes ein Zugriffsschutz deaktivierbar ist und mit dem Rechner-Arbeitsplatz weitergearbeitet werden kann.

Für den Fall, dass das Zeitintervall zu groß gewählt ist, muss der Schutz direkt durch eine geeignete Tastatureingabe eingeschaltet werden, um zu verhindern, dass Unberechtigte auf Daten des Rechner-Arbeitsplatzes zugreifen können. Ist dagegen das Zeitintervall zu klein gewählt, muss der Benutzer sich häufig wieder einloggen, um den Rechner-Arbeitsplatz zu entsperren. Das bedeutet, der Benutzer muss häufig sein Passwort eingeben, um weiterarbeiten zu können.

Der vorliegenden Erfindung liegt die Aufgabe zugrunde, einen Rechner-Arbeitsplatz der eingangs genannten Art anzugeben, dessen Zugriffsschutz einfach aktivierbar ist. Darüber hinaus ist ein Verfahren zum vereinfachten Aktivieren eines Zugriffsschutzes eines Rechner-Arbeitsplatzes anzugeben.

Diese Aufgabe wird im Hinblick auf den Rechner-Arbeitsplatz dadurch gelöst, dass der Rechner-Arbeitsplatz eine Leseeinheit zum berührungslosen Lesen von Informationen und eine Auswerteeinheit enthält, in welcher erste Identifikationsdaten des mindestens einen Benutzers hinterlegt sind und welche nach einem deaktivierten Zugriffsschutz die ersten Identifikationsdaten mit zweiten Identifikationsdaten vergleicht, die in einem Speicher eines Transponders hinterlegt sind, wobei in Abhängigkeit des Vergleichsergebnisses für den mindestens einen Benutzer der Zugriffsschutz aktiviert wird. Im Hinblick auf das Verfahren wird diese Aufgabe durch die im Anspruch 4 angegebenen Maßnahmen gelöst.

Vorteilhaft ist, dass auf eine Vorgabe eines Zeitintervalls zum Aktivieren des Zugriffsschutzes verzichtet werden kann. Die Auswerteeinheit erfasst kontinuierlich oder zyklisch die zweiten Identifikationsdaten des Transponders des Benutzers und es wird dadurch sofort erkannt, ob der Benutzer seinen Rechner-Arbeitsplatz verlässt. Ist dies der Fall, liest die Leseeinheit keine zweiten Identifikationsdaten, wodurch die Auswerteeinheit den Zugriffsschutz aktiviert.

Mit Transpondern und einem Lese- oder Schreib-/Lesegerät arbeitende Identifikationssysteme, darunter insbesondere RFID-Systeme (Radio Frequency Identification), sowie ihre Verwendung in Wegfahrsperren in Kraftfahrzeugen, in der Abfallentsorgung und der industriellen Fertigung sind allgemein bekannt.

In einer Ausgestaltung der Erfindung bleibt in Abhängigkeit eines vorgebbaren Zeitintervalls der Zugriffsschutz deaktiviert, falls der Zugriffsschutz bereits deaktiviert war und die Leseeinheit keine zweiten Identifikationsdaten ausliest. Dadurch wird vermieden, dass bereits durch eine kurze Abwesenheit des Benutzers der Zugriffsschutz aktiviert wird und ein erneutes Einloggen des Benutzers erforderlich ist.

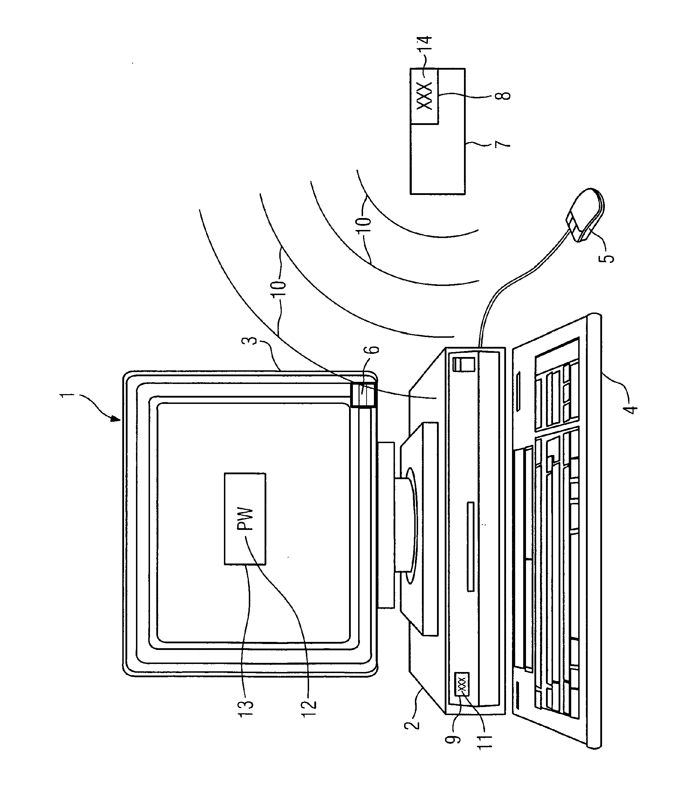

Die Erfindung wird nachfolgend anhand eines Ausführungsbeispiels unter Bezugnahme auf die einzige Figur der Zeichnung näher erläutert. Die Figur der Zeichnung zeigt in schematischer Darstellung einen Rechner-Arbeitsplatz.

In der Figur ist mit 1 ein Rechner-Arbeitsplatz bezeichnet, welcher eine Rechnereinheit 2, ein Bildausgabegerät 3 und Eingabemittel in Form einer Tastatur 4 und einer Maus 5 umfasst. Das Bildausgabegerät 3 ist mit einer Leseeinheit 6 (Reader) zum berührungslosen Lesen von Informationen versehen, welche ein Transponder 7 der Leseeinheit 6 übermittelt. Die Leseeinheit 6 muss nicht am Bildausgabegerät 3 angeordnet sein, sondern kann selbstverständlich auch Bestandteil der Rechnereinheit 2 oder einer Eingabeeinheit sein. Der Transponder 7 ist als passiver RFID-Transponder ausgebildet, ermöglicht die Übermittlung von Informationen per Funk 10 in einer Entfernung bis zu 10 m und wird vorzugsweise am Körper eines Anwenders bzw. eines Benutzers des Rechner-Arbeitsplatzes 1 getragen. Die Informationen sind in einem Speicher 8 des Transponders 7 hinterlegt, wobei diese Informationen kontinuierlich oder zyklisch der Leseeinheit 6 übertragen werden. Die Informationen umfassen eine Liste von ersten Identifikationsdaten 11 (IDs), welche der Auswerteeinheit 9 anzeigen, welche Benutzer den Rechner-Arbeitsplatz benutzen und auf welche Programme und/oder Daten diese Benutzer zugreifen dürfen, wobei jedem Benutzer eine ID zugeordnet ist. Die Leseeinheit 6 führt die ersten Identifikationsdaten 11 einer mit ihr verbundenen Auswerteeinheit 9 zu, welche diese Daten 11 - wie im Folgenden noch gezeigt wird - weiterverarbeitet. Vorzugsweise ist die Auswerteeinheit 9 Bestandteil der Rechnereinheit 2 und ist in Form eines auf der Rechnereinheit 2 ablauffähigen Auswerteprogramms verwirklicht. Selbstverständlich kann die Auswerteeinheit 9 auch Bestandteil der Leseeinheit 6 sein.
Es wird angenommen, dass der Rechner-Arbeitsplatz 1 gesperrt ist, d. h., der Zugriffsschutz ist aktiviert und es wird verhindert, dass Unberechtigte auf Daten und/oder Programme des Rechner-Arbeitsplatzes 1 zugreifen können. Der Zugriffsschutz wird in der Art und Weise aktiviert, dass z. B. die Rechnereinheit 2 ein an sich bekanntes Zugriffsschutz- und Bildschirmschoner-Programm startet, wodurch ein Bildschirmschoner auf dem Bildausgabegerät 3 dargestellt wird. Dieses Programm kann durch den Benutzer deaktiviert werden, indem dieser zunächst eine Taste auf der Tastatur 4 drückt oder die Maus 5 bewegt. Daraufhin erscheint auf dem Bildausgabegerät 3 anstatt des Bildschirmschoners eine Aufforderung, ein Passwort 12 in ein Feld 13 einzugeben, um den Rechner-Arbeitsplatz 1 zu entsperren. Die Rechnereinheit 2 vergleicht das durch den Benutzer eingegebene Passwort mit einem in der Rechnereinheit 2 hinterlegten gültigen Passwort 12, wobei die Rechnereinheit 2 den Rechner-Arbeitsplatz 1 entsperrt, falls das eingegebene Passwort mit dem hinterlegten übereinstimmt. Nach der Freischaltung des Rechner-Arbeitsplatzes 1 kann dieser nun "eingeloggte" Benutzer wieder auf die im Rechner-Arbeitsplatz 1 hinterlegten Daten und Programme zugreifen. Nachdem der Zugriffsschutz durch den Benutzer deaktiviert ist, vergleicht die Auswerteeinheit 9 die Liste der ersten Identifikationsdaten 11 von aktuell berechtigten Benutzern des Rechner-Arbeitsplatzes 1 mit einer im Speicher 8 des Transponders 7 hinterlegten Liste von zweiten Identifikationsdaten 14, welche der Leseeinheit 6 durch den Transponder 7 übermittelt werden.
Für den Fall, dass die Auswerteeinheit 9 erkennt, dass die übermittelte Liste der zweiten Identifikationsdaten 14 die ID des "eingeloggten" Benutzers enthält und dass die in der Auswerteeinheit 9 hinterlegte Liste von Identifikationsdaten 11 auch diese ID aufweist, bleibt der Zugriffsschutz deaktiviert. Ansonsten sperrt die Auswerteeinheit 9 den Rechner-Arbeitsplatz 1, d. h., die Auswerteeinheit 9 aktiviert den Zugriffsschutz. Mit anderen Worten, wenn eine anwesende RFID in der Liste der aktuell in der Auswerteeinheit 9 hinterlegten gültigen IDs enthalten ist, bleibt der Zugriff erhalten, ansonsten wird der Zugriff verhindert, der Rechner-Arbeitsplatz 1 wird gesperrt. Nach der Aktivierung des Zugriffsschutzes kann der Rechner-Arbeitsplatz 1 nur durch Eingabe eines gültigen Passwortes 12 eines berechtigten Benutzers wieder deaktiviert werden. Das bedeutet, dass dadurch der Zugriff auf den Rechner-Arbeitsplatz 1 wieder ermöglicht bzw. aktiviert wird, wodurch dieser Benutzer auf Daten und/oder Programme des Rechner-Arbeitsplatzes 1 zugreifen kann.

Es kann nun vorkommen, dass die Leseeinheit 6 keine zweiten Identifikationsdaten 14 empfängt, weil der Benutzer den Rechner-Arbeitsplatz 1 verlässt. Um zu vermeiden, dass die Auswerteeinheit 9 den Zugriffsschutz des gerade für diesen Benutzer freigeschalteten Rechner-Arbeitsplatzes 1 bereits dann aktiviert, falls der Anwender den Rechner-Arbeitsplatz 1 nur für eine kurze Zeit verlässt, ist vorgesehen, dass der Zugriffsschutz ferner in Abhängigkeit eines vorgebbaren, vorzugsweise sehr kurzen Zeitintervalls aktivierbar ist. Erst dann, wenn der Leseeinheit 6 zu lange keine gültigen zweiten Identifikationsdaten 14 übermittelt werden, aktiviert die Auswerteeinheit 9 den Zugriffsschutz.

## Patentansprüche

1. Rechner-Arbeitsplatz mit einem Zugriffsschutz, welcher einen unberechtigten Zugriff eines Benutzers auf den Rechner-Arbeitsplatz (1) verhindert, wobei ein gültiges Passwort (12) mindestens eines Benutzers den Zugriffsschutz deaktiviert, **dadurch gekennzeichnet, dass** der Rechner-Arbeitsplatz (1) eine Leseeinheit (6) zum berührungslosen Lesen von Informationen und eine Auswerteeinheit (9) enthält, in welcher erste Identifikationsdaten (11) des mindestens einen Benutzers hinterlegt sind und welche nach einem deaktivierten Zugriffsschutz die ersten Identifikationsdaten (11) mit zweiten Identifikationsdaten (14) vergleicht, die in einem Speicher (8) eines Transponders (7) hinterlegt sind, wobei in Abhängigkeit des Vergleichsergebnisses für den mindestens einen Benutzer der Zugriffsschutz aktiviert wird.

2. Rechner-Arbeitsplatz nach Anspruch 1, **dadurch gekennzeichnet, dass** die Auswerteeinheit (9) die ersten und zweiten Identifikationsdaten (11, 14) kontinuierlich oder zyklisch vergleicht.

3. Rechner-Arbeitsplatz nach Anspruch 2, **dadurch gekennzeichnet, dass** für den Fall, dass der Zugriffsschutz deaktiviert ist und die Leseeinheit (6) keine zweiten Identifikationsdaten (14) ausliest, in Abhängigkeit eines vorgebbaren Zeitintervalls der Zugriffsschutz durch die Auswerteeinheit (9) deaktiviert bleibt.

4. Verfahren zum Aktivieren eines Zugriffsschutzes für einen Rechner-Arbeitsplatz, durch welchen ein unberechtigter Zugriff eines Benutzers auf den Rechner-Arbeitsplatz (1) verhindert wird, wobei ein gültiges Passwort (12) mindestens eines Benutzers den Zugriffsschutz deaktiviert, **gekennzeichnet durch** folgende Verfahrensschritte:
- Abspeichern von ersten Identifikationsdaten (11) des mindestens einen Benutzers in eine Auswerteeinheit (9) des Rechner-Arbeitplatzes (1),
- berührungsloses Übertragen von zweiten Identifikationsdaten (14), welche in einem Speicher (8) eines Transponders (7) hinterlegt sind, an eine Leseeinheit (6) des Rechner-Arbeitsplatzes (1),
- Vergleichen der ersten Identifikationsdaten (11) mit den zweiten Identifikationsdaten (14) nach einer Deaktivierung des Zugriffsschutzes,
- Aktivieren des Zugriffsschutzes in Abhängigkeit des Vergleichsergebnisses.

5. Verfahren nach Anspruch 4, **dadurch gekennzeichnet, dass** die ersten und zweiten Identifikationsdaten (11, 14) kontinuierlich oder zyklisch verglichen werden.

6. Verfahren nach Anspruch 4 oder 5, **dadurch gekennzeichnet, dass** für den Fall, dass der Zugriffsschutz deaktiviert ist und keine zweiten Identifikationsdaten (14) ausgelesen werden, in Abhängigkeit eines vorgebbaren Zeitintervalls der Zugriffsschutz deaktiviert bleibt.
